Europäisches Patentamt

European Patent Office

Office européen des brevets

(11) Numéro de publication: **0 306 416**
A1

## (12) DEMANDE DE BREVET EUROPEEN

(21) Numéro de dépôt: 88420286.2

(22) Date de dépôt: 23.08.88

(51) Int. Cl.⁴: **F 16 K 17/10**
F 16 K 41/10

(30) Priorité: 25.08.87 FR 8712172

(43) Date de publication de la demande:
08.03.89 Bulletin 89/10

(84) Etats contractants désignés:
AT BE CH DE ES GB GR IT LI LU NL SE

(71) Demandeur: SOCIETE D'EXPLOITATION DE BREVETS
POUR L'INDUSTRIE ET LA MARINE (SEBIM)
Z.I. La Palunette
F-13220 Chateauneuf les Martigues (FR)

(72) Inventeur: Gemignani, André
Quartier Les Colles
F-13920 Saint Mitre Les Remparts (FR)

(74) Mandataire: Maureau, Philippe et al
Cabinet Germain & Maureau Le Britannia - Tour C 20, bld
Eugène Déruelle Boîte Postale 3011
F-69392 Lyon Cédex 03 (FR)

(54) Soupape de sécurité pilotée.

(57) Cette soupape est du type comprenant un clapet venant prendre appui sur un siège pour assurer la fermeture de la capacité à protéger, ce clapet étant disposé à une extrémité d'un arbre monté coulissant dans un fourreau solidaire du corps et actionné à partir d'une chambre alimentée en fluide sous pression depuis un dispositif de pilotage.

Selon l'invention l'extrémité supérieure du fourreau (24) présente une collerette périphérique (25) servant à son appui le corps (20) de la soupape et à sa fixation sur celui-ci par appui du chapeau (28) de la soupape, tandis que l'extrémité de l'arbre (34) opposée à celle équipée du clapet (35) comporte également une collerette périphérique (36), les collerettes en vis-à-vis (25,36) respectivement de l'arbre (34) et du fourreau (24) servant à la fixation avec étanchéité d'une chemise métallique (37) de longueur variable, la face extérieure de cette chemise et la face en bout de l'arbre délimitant avec le chapeau de la soupape une chambre soumise à la pression de fluide de pilotage.

Application à l'équipement d'une capacité contenant un fluide sous pression.

FIG. 3

EP 0 306 416 A1

**Description**

## Soupape de sécurité pilotée

La présente invention a pour objet une soupape de sécurité pilotée.

Il est indispensable d'équiper les appareils ou circuits contenant un fluide sous pression, tels que les chaudières par exemple, d'une soupape de sécurité apte à mettre la capacité à protéger en communication avec l'atmosphère lorsque la pression de fluide atteint une valeur maximale prédéterminée, afin d'éviter une surpression nuisible et dangereuse à l'intérieur de la capacité.

Les soupapes utilisées dans les installations soignées et devant présenter une bonne fiabilité sont généralement des soupapes pilotées à partir du fluide contenu dans la capacité protégée.

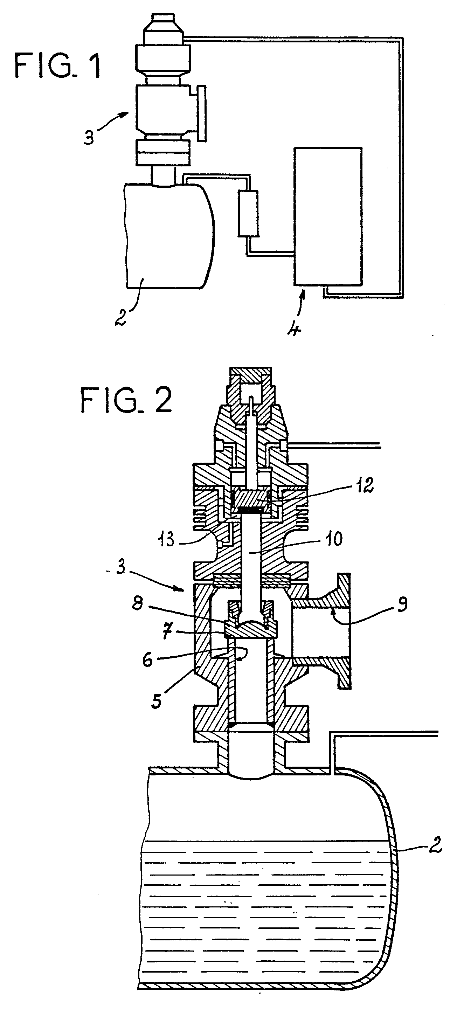

Les figures 1 et 2 du dessin schématique annexé représentent une installation traditionnelle, la figure 1 montrant schématiquement l'ensemble de l'installation, et la figure 2 représentant plus spécialement la soupape proprement dite vue en coupe longitudinale. La capacité 2 à protéger est équipée d'une soupape de sécurité portant la référence générale 3, elle-même commandée par un dispositif de pilotage 4, alimenté par le fluide sous pression contenu dans la capacité.

La soupape 3 comprend un corps 5 bridé sur la capacité 2, et comportant un passage 6 dont l'extrémité supérieure forme un siège 7 pour un clapet de fermeture 8. Dans le corps 5 est également ménagé un orifice 9 permettant de mettre l'intérieur de la capacité à l'atmosphère, en position ouverte du clapet 8.

Le clapet 8 est monté à une extrémité d'une tige 10, coulissante à l'intérieur d'un alésage du corps, à l'autre extrémité de laquelle est fixé un piston de commande 12 monté dans un cylindre 13 alimenté en fluide à partir du dispositif de pilotage 4.

Une telle solution présente de nombreux inconvénients. C'est ainsi notamment que cette soupape est de réalisation complexe en raison de la présence d'un vérin, des barrières thermiques nécessaires, et des joints d'étanchéité qui, du fait des frottements qu'ils engendrent offrent une résistance à la manoeuvre du clapet, et qui sont sous pression quand la soupape est dans la position habituelle de fonctionnement c'est-à-dire en position fermée. Du fait de la présence de ces joints, la tête de soupape ne peut admettre de fluide chaud. Cette complexité de réalisation est également augmentée du fait de la nécessité d'une mise à l'atmosphère sous le vérin 12. Enfin. la présence du vérin nécessite la mise en oeuvre d'une tête de soupape dont l'encombrement est important.

Il existe également des soupapes pilotées. à vérin intérieur qui. si elles sont plus compactes que la soupape à vérin extérieur décrite précédemment. présentent les mêmes inconvénients que celle-ci et ne peuvent pas être en outre utilisées à de hautes températures.

Le brevet français 82 14 491 concerne une soupape de sécurité comportant un organe support de clapet présentant deux sections successives différentes, guidées dans deux parties tubulaires successives, l'organe support servant à la fixation avec étanchéité d'une extrémité d'un soufflet métallique dont l'autre extrémité est fixée avec étanchéité sur le corps de la soupape. La chambre de commande de la soupape est donc délimitée pour partie par le soufflet lui-même. Si ce dispositif possède toutes les qualités requises d'un point de vue fonctionnel, il présente l'inconvénient que le soufflet métallique, en conditions normales de fonctionnement, c'est-à-dire soupape fermée, est en position étirée. Devant résister, dans cette position, à la pression de l'installation à protéger, le soufflet est épais, et par suite raide et fragile. Enfin, l'extrémité de l'organe support de clapet est de section importante, ce qui entraîne un dimensionnement correspondant du corps de la soupape.

La présente invention vise à remédier à ces inconvénients.

A cet effet, la soupape qu'elle concerne, du type comprenant un clapet venant prendre appui sur un siège pour assurer la fermeture de la capacité à protéger, ce clapet étant disposé à une extrémité d'un arbre monté coulissant dans un fourreau solidaire du corps et actionné à partir d'une chambre alimentée en fluide sous pression depuis un dispositif de pilotage, est caractérisée en ce que l'extrémité supérieure du fourreau présente une collerette périphérique servant à son appui sur le corps de la soupape et à sa fixation sur celui-ci par appui du chapeau de la soupape tandis que l'extrémité de l'arbre opposée à celle équipée du clapet comporte également une collerette périphérique, les collerettes en vis à vis respectivement de l'arbre et du fourreau servant à la fixation avec étanchéité d'une chemise métallique de longueur variable (soufflet), la face extérieure de cette chemise et la face en bout de l'arbre délimitant avec le chapeau de la soupape une chambre soumise à la pression du fluide de pilotage.

En conditions normales, la force exercée par le fluide de commande sur l'arbre, à laquelle s'ajoute la force développée par un ressort agissant sur l'arbre, est supérieure à la force exercée sur le clapet par le fluide contenu dans la capacité à protéger. L'ensemble mobile se trouve donc dans une position assurant la fermeture du clapet. Il est intéressant de noter que dans cette position la chemise métallique est dans sa position de longueur minimale, c'est-à-dire dans le cas d'un soufflet, en position comprimée de celui-ci. Or, c'est dans cette position qu'un soufflet résiste le mieux à la pression. Il est donc possible de réaliser une chemise d'épaisseur et de raideur réduites, permettant un grand nombre de cycles, d'une maintenance peu importante et d'un faible prix de revient. Une épaisseur réduite de la chemise est également rendue possible du fait que cell-ci est logée à l'extérieur du corps proprement dit de la soupape, dans une zone où la température est basse et où les fluctuations dues au débit du fluide contenu dans la capacité à protéger sont inexistantes.

Selon une forme d'exécution de cette soupape, la face du corps, dans laquelle débouche l'alésage servant de logement au fourreau, comporte, adjacent à l'alésage, un évidement servant à l'encastrement, avec interposition d'un joint, de la collerette du fourreau, sur la face opposée de laquelle vient prendre appui un épaulement que comporte le chapeau.

Le montage de la soupape est donc réalisé de façon simple, et son caractère modulaire permet, si besoin est, un remplacement rapide de l'ensemble constitué par le fourreau, l'arbre et le soufflet.

Avantageusement, le clapet est conformé pour pouvoir, en position ouverte de la soupape, être engagé pour partie dans le fourreau et obturer totalement l'extrémité de celui-ci située du côté du siège de la soupape.

Il en résulte que la partie active de la soupape est totalement isolée de la veine d'écoulement de fluide, en position d'ouverture de la soupape, évitant ainsi tout risque de dégradation par cavitation et érosion sous l'action du débit turbulent du fluide.

Conformément à une autre caractéristique de l'invention, le siège du clapet comprend une partie annulaire qui, montée de façon définitive sur la soupape, présente une partie taraudée servant au montage de façon amovible d'une pièce calibrée fixée de façon amovible par vissage.

Il est ainsi possible, par simple vissage de cette pièce d'adapter rapidement le débit nominal de la soupape aux conditions requises, ce qui évite toute reprise en machine et la nécessité de disposer d'un stock important de pièces coûteuses.

Avantageusement, cette soupape comprend un joint élastique métallique monté sur la partie fixe du siège assurant l'étanchéité entre le clapet et le siège, ce qui assure une excellente étanchéité même pour des fluides de faible viscosité.

De toute façon, l'invention sera bien comprise à l'aide de la description qui suit, en référence au dessin schématique annexé représentant, à titre d'exemple non limitatif, une forme d'exécution de cette soupape :

Figures 3 et 4 sont deux vues en coupe longitudinale de la soupape, respectivement, en position de fermeture et en position d'ouverture ;

Figure 5 est une vue en coupe longitudinale et à échelle agrandie d'une forme de réalisation du siège de cette soupape.

La soupape, représentée au dessin, comprend un corps 20 présentant un premier orifice 21 en communication avec la capacité à protéger et un second orifice 22 constituant l'orifice de décharge, les orifices 21 et 22 étant disposés de part et d'autre du siège de la soupape désigné par la référence générale 23.

Coaxialement à l'orifice 21 et au siège 23, est monté à l'intérieur du corps, un fourreau 24 présentant, à proximité de son extrémité opposée à celle tournée vers le siège, une collerette 25 périphérique tournée vers l'extérieur, montée en appui à l'intérieur d'un évidement 26 que comporte la face supérieure du corps avec interposition de joints d'étanchéité 27.

Le chapeau 28 de la soupape, qui est fixé par des boulons 29 sur le corps, présente un épaulement 30 venant prendre appui sur la collerette 25 du fourreau 24 avec interposition d'un joint 32.

A l'intérieur du fourreau 24 est monté coulissant, avec interposition de bagues de frottement 33, un arbre 34 dont une extrémité est équipée d'un clapet 35 destiné à venir prendre appui avec étanchéité sur le siège 23 et dont l'autre extrémité présente une collerette périphérique 36 tournée vers l'extérieur, située en vis-à-vis de la collerette 25 du fourreau 24.

Les collerettes 25 et 36 servent à la fixation, avec étanchéité, des extrémités d'une chemise métallique de longueur variable constituée, dans la forme d'exécution représentée au dessin, par un soufflet 37.

A l'intérieur de l'arbre 34 est monté un ressort 38 développant une force dans le sens de fermeture de la soupape. Dans le chapeau 28 est ménagé un orifice 39 pour l'amenée et l'évacuation du fluide de pilotage de la soupape dans la chambre 40.

En pratique, lorsque la chambre 40 est alimentée en fluide sous pression, celui-ci exerce, sur une surface égale au diamètre moyen du soufflet 37, une force tendant à déplacer l'arbre en direction du siège, à laquelle s'ajoute la force développée par le ressort 38. Dans le sens opposé, s'exerce une pression due au fluide contenu dans la capacité à protéger, amené par l'orifice 21.

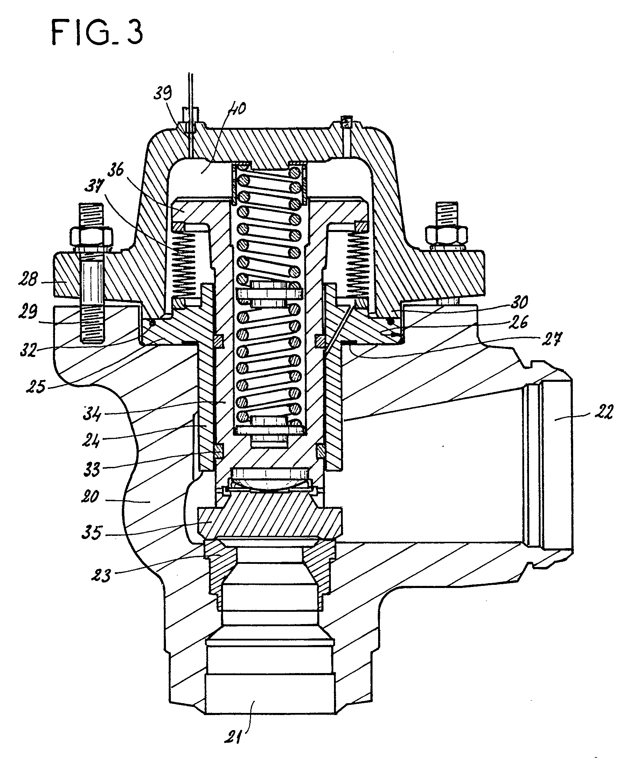

En conditions normales de fonctionnement, la force exercée sur la face inférieure du clapet est inférieure à la force exercée sur l'arbre par le fluide de commande et par le ressort 38. Le clapet est donc dans la position de fermeture représentée à la figure 3.

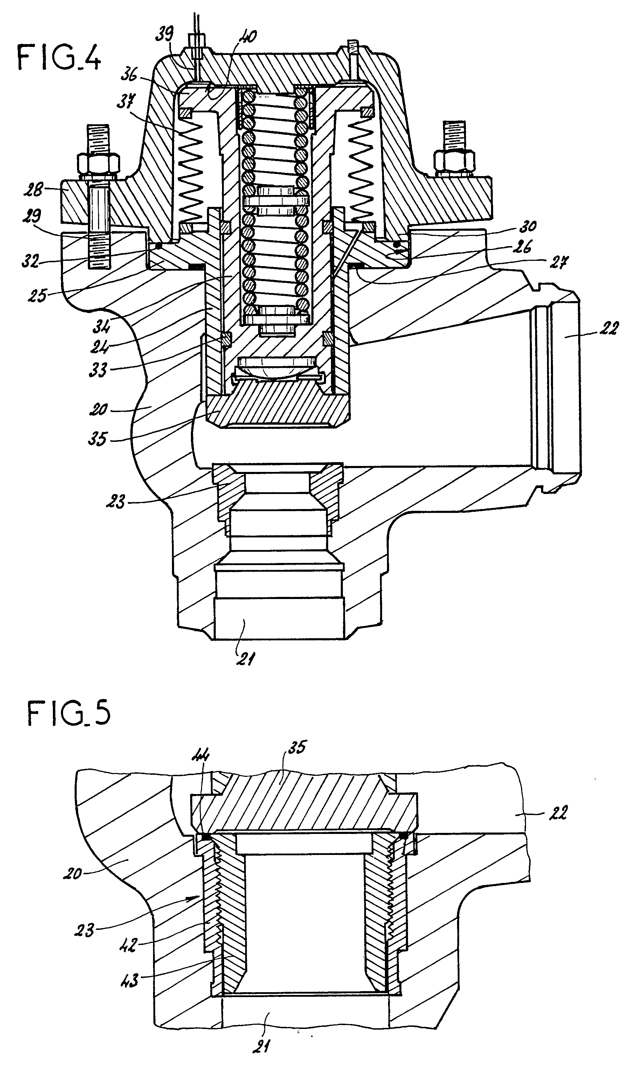

Lorsque la chambre 40 est vidée, la force exercée sur la face inférieure du clapet étant supérieure à la force développée par le ressort 38, la soupape s'ouvre et vient occuper la position représentée à la figure 4. Il est à noter que, dans cette position, le clapet 35 obture totalement l'extrémité ouverte du fourreau 24, ce qui permet de soustraire à l'écoulement turbulent et agressif du fluide traversant la soupape les organes de commande de celle-ci et notamment le soufflet 37.

Il est également intéressant de noter que le soufflet 37 se trouve dans une zone éloignée du fluide dont il n'a pas à subir les effets, notamment en matière de débit et de température. De ce fait, la durée de vie de la soupape est considérablement augmentée.

En outre, et comme cela ressort parfaitement des figures 3 et 4, le soufflet 37 se trouve en position comprimée lorsqu'il est soumis à une pression de fluide régnant dans la chambre 40. Or, cette position comprimée correspond à la position dans laquelle le soufflet résiste le mieux à la pression. Cette disposition autorise donc une réduction significative de l'épaisseur du soufflet, de sa raideur et par conséquence de son coût.

Il convient également de souligner l'aspect modulaire de cette soupape qui permet un démontage très rapide de l'ensemble constitué par la chemise métallique 37, l'arbre 34 et le fourreau 24 en vue de leur remplacement éventuel dans le cadre de la maintenance de l'appareil.

La figure 5 représente un détail de réalisation du siège 23 dans lequel celui-ci comprend deux parties, à savoir une partie extérieure 42 montée de façon définitive dans le corps 20 par emmanchement et sertissage par exemple, et une partie intérieure 43 montée de façon amovible par exemple par vissage dans la partie 42.

Il est ainsi possible de dissocier les fonctions d'étanchéité, réalisée au niveau de la partie 42 par exemple par un joint 44 métallique, et de calibrage du débit obtenu par la partie intérieure 43. Il est donc possible d'adapter une soupape standard au débit nominal requis en montant dans la partie 42 du siège 23, une partie 43 présentant une section de passage adaptée, sans avoir à procéder à des opérations d'usinage complexes.

Comme il ressort de ce qui précède, l'invention apporte une grande amélioration à la technique existante, en fournissant une soupape de sécurité de conception simple et possèdant une grande fiabilité.

## Revendications

1. Soupape de sécurité pilotée, du type comprenant un clapet venant prendre appui sur un siège pour assurer la fermeture de la capacité à protéger, ce clapet étant disposé à une extrémité d'un arbre monté coulissant dans un fourreau solidaire du corps et actionné à partir d'une chambre alimentée en fluide sous pression depuis un dispositif de pilotage, caractérisée en ce que l'extrémité supérieure du fourreau (24) présente une collerette périphérique (25) servant à son appui sur le corps (20) de la soupape et à sa fixation sur celui-ci par appui du chapeau (28) de la soupape, tandis que l'extrémité de l'arbre (34) opposée à celle équipée du clapet (35) comporte également une collerette périphérique (36), les collerettes en vis-à-vis (25,36) respectivement de l'arbre (34) et du fourreau (24) servant à la fixation avec étanchéité d'une chemise métallique (37) de longueur variable, la face extérieure de cette chemise et la face en bout de l'arbre délimitant avec le chapeau de la soupape une chambre soumise à la pression du fluide de pilotage.

2. Soupape selon la revendication 1, caractérisée en ce que chemise métallique (37) est constituée par un soufflet.

3. Soupape selon l'une quelconque des revendications 1 et 2, caractérisée en ce que la face du corps (20), dans laquelle débouche l'alésage servant de logement au fourreau (24) comporte, adjacent à l'alésage, un évidement (26) servant à l'encastrement, avec interposition d'un joint (27), de la collerette (25) du fourreau, sur la face opposée de laquelle vient prendre appui un épaulement (30) que comporte le chapeau (28).

4. Soupape selon l'une quelconque des revendications 1 à 3, caractérisée en ce que le clapet (35) est conformé pour pouvoir, en position ouverte de la soupape, être engagé pour partie dans le fourreau (24) et obturer totalement l'extrémité de celui-ci située du côté du siège de la soupape.

5. Soupape selon l'une quelconque des revendications 1 à 4, caractérisée en ce que le siège (23) du clapet comprend une partie annulaire (42) qui, montée de façon définitive sur la soupape, présente une partie taraudée servant au montage d'une pièce calibrée (43) fixée de façon amovible par vissage.

6. Soupape selon la revendication 5, caractérisée en ce qu'elle comprend un joint élastique métallique (44) monté sur la partie fixe (42) du siège assurant l'étanchéité entre le clapet et le siège.

FIG. 1

3

2

4

FIG. 2

12

13

10

3

8

7

9

6

5

2

## FIG. 3

FIG.4

FIG.5

Office européen
des brevets

**RAPPORT DE RECHERCHE EUROPEENNE**

Numero de la demande

EP 88 42 0286

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 093 163 (GEMIGNANI) --- | | F 16 K 17/10 <br> F 16 K 41/10 |
| A | US-A-2 308 183 (LEWIS) --- | | |
| A | FR-A- 669 399 (LANQUETIN) ----- | | |

| | DOMAINES TECHNIQUES RECHERCHES (Int. Cl.4) |
|---|---|
| | F 16 K |

Le présent rapport a été établi pour toutes les revendications

| Lieu de la recherche | Date d'achèvement de la recherche | Examinateur |
|---|---|---|
| LA HAYE | 29-10-1988 | VERELST P.E.J. |